# EUROPÄISCHE PATENTSCHRIFT

(11) **EP 3 200 969 B1**
(45) Veröffentlichungstag und Bekanntmachung des Hinweises auf die Patenterteilung: **22.05.2019**
(21) Anmeldenummer: 15774575.3
(22) Anmeldetag: 29.09.2015
(51) Int. Cl.: B29C 51/14, B32B 38/12

(54) **VERFAHREN UND VORRICHTUNG ZUM LAMINIEREN EINES PROFILIERTEN FASERFORMTEILS**
METHOD AND DEVICE FOR LAMINATING A PROFILED MOULDED FIBRE PART
PROCÉDÉ ET DISPOSITIF DE STRATIFICATION D'UNE PIÈCE MOULÉE FIBREUSE PROFILÉE

(30) Priorität: 30.09.2014 DE 102014114186
(43) Veröffentlichungstag der Anmeldung: 09.08.2017
(73) Patentinhaber: SIG Technology AG, 8212 Neuhausen am Rheinfall (CH)
(72) Erfinder: HALVARDSSON, Christer, 686 93 Sunne (SE); KJELLIN, David, 654 65 Karlstad (SE)
(74) Vertreter: Cohausz & Florack
(86) Internationale Anmeldenummer: PCT/EP2015/072369
(87) Internationale Veröffentlichungsnummer: WO 2016/050739

(56) Entgegenhaltungen:
- WO-A1-93/05943
- DE-A1- 2 037 309
- US-A- 2 796 634
- US-A- 4 230 764

## Beschreibung

Die Erfindung betrifft ein Verfahren und eine Vorrichtung zum Laminieren eines profilierten Faserformteils für Verpackungselemente, insbesondere für Behälter von Flüssigkeiten, mit einer thermoplastischen Folie, wobei die Folie mittels Wärme und Differenzdruck auf die zu beschichtende Oberfläche des Faserformteils laminiert wird.

Ganz allgemein sind Fügeverfahren längst gängiger Stand der Technik. So zeigt beispielsweise die gattungsgemäße US-A 2 796 634 ein Form- und Fügeverfahren für aus zwei relativ festen Lagen bestehende Formteile. Dabei soll die außenliegende Oberfläche möglichst unversehrt bleiben und so eine intakte Schauseite von beispielsweise Haushaltsgeräten und Möbeln abgeben. Hierzu wird die äußere Lage zunächst thermisch erwärmt und mittels einer starren und einer bewegbaren Formhälfte mechanisch vorgeformt und so an die spätere Form angenähert. In der Folge werden die beiden Lagen verbunden und das Formteil in seine endgültige Form gebracht.

Es ist zudem seit langem bekannt, profilierte Faserformteile auch mit schwierigen Geometrien mit einer thermoplastischen Folie zu beschichten, in dem Faserformteil und Folie miteinander laminiert werden. Eine gas- bzw. flüssigkeitsdichte Beschichtung ist beispielsweise dann erwünscht, wenn die Faserformteile als Verpackungselemente für Behälter von Flüssigkeiten wie beispielsweise Getränken oder Lebensmitteln dienen sollen.

Aus der US-A 3 657 044 ist es bekannt, ein profiliertes Faserformteil mit einer dünnen thermoplastischen Folie zu beschichten, indem die Folie unter Einwirkung von Hitze und Vakuum in das Faserformteil hineingezogen und mit diesem laminiert wird. Dieses Verfahren hat sich gegenüber den älteren Sprüh- oder Tauchverfahren bewährt. Die Folie wird dabei zwischen zwei Werkzeugteile eingespannt, um an ihrem äußeren Rand bewegungsfrei fixiert zu werden. Der konstruktive Aufwand für dieses bekannte Laminierverfahren ist erheblich und eine gleichmäßige Stärke der laminierten Folie nur bei einfachen Geometrien zu erreichen.

Weitere Tiefziehverfahren zum Laminieren von profilierten Faserformteilen mit einer thermoplastischen Folie sind aus den DE 25 47 477 A1 und DE 25 47 814 A1 für sich bekannt.

Die DE 25 47 477 A1 beschreibt dabei eine Vorrichtung und ein Verfahren zur Luftführung in der Tiefziehstation von thermoplastischen Folien. Sie befasst sich insbesondere mit der Luftführung und unterschiedlichen Temperaturen während des Laminierens. Zur Vermeidung der Abkühlung der erwärmten Folie durch den beaufschlagten Unterdruck wird vorgeschlagen, die erwärmte Folie mittels eines Stempels in Richtung der zu beschichtenden Oberfläche des Faserformteils einzuwölben.

Die DE 25 47 814 A1 beschreibt eine Maschine zum Auskleiden von Papierbechern mit einer in den Becher hinein tiefzuziehenden Kunststofffolie. Hier werden keine geschlossenen Formen mehr verwendet, sondern die einzelnen Folienabschnitte sind mechanisch an einem umlaufenden Rahmen befestigt. Beide vorgenannten Dokumente zeigen jedoch ein reines Tiefziehverfahren für die endgültige Verformung der eingesetzten Kunststofffolie.

Davon ausgehend liegt der vorliegenden Erfindung die Aufgabe zugrunde, die eingangs genannten und zuvor näher beschriebenen Verfahren und Vorrichtung zum Laminieren eines profilierten Faserformteils mit einer thermoplastischen Folie so auszugestalten und weiterzubilden, dass das Laminieren des Faserformteils in seiner Gesamtheit verbessert wird, indem durch die Verwendung dünnerer Folien eine Materialersparnis stattfinden kann und wobei besonders gleichmäßige Laminierungsstärken über das gesamte Faserformteil erreicht werden können.

Verfahrensmäßig erfolgt die Lösung der Aufgabe bei einem Verfahren nach dem Oberbegriff von Anspruch 1 dadurch, dass das Faserformteil (7) für Verpackungselemente, insbesondere für Behälter von Flüssigkeiten, verwendet werden soll, dass für das Verformen ausschließlich ein positives Formwerkzeug (5) verwendet wird und dass zum Entfernen des Formwerkzeugs (5) eine Matrize (8) verwendet wird.:
Eine entsprechende Vorrichtung gemäß dem Oberbegriff von Anspruch 9 löst die vorgenannte Aufgabe durch
- ausschließlich ein, als Positivform ausgebildetes, Formwerkzeug (5) zum plastischen Verformen der Folie (1), so dass die Folie (1) entsprechend der profilierten Form des Endes des Formwerkzeuges (5) verformbar ist,
- eine Matrize (8) zum Zuführen des Faserformteils (7) und Entfernen des laminierten Faserformteils (7') und
- ein Differenzdruckaggregat.

Die Erfindung hat erkannt, dass eine bessere und gleichmäßigere Verformung der Folie dadurch erfolgen kann, dass diese nicht ausschließlich durch Überdruck bzw. Vakuum an die zu beschichtende Oberfläche des Faserformteils herangedrückt bzw. gesaugt wird, sondern dass eine Kombination eines "Prägestempels" mit dem bekannten Tiefziehverfahren bessere Ergebnisse liefert, wobei es sogar möglich ist, die verwendeten Folienstärken zu reduzieren, so dass - insbesondere bei Massenware - nicht unerhebliche Materialeinsparungen möglich geworden sind. Die Stärke der zu verwendenden Folie richtet sich dabei in erster Linie nach dem Anwendungszweck. Wenn die Beschichtung des Faserformteils jedoch zu einer ausreichenden Gas- und Flüssigkeitsdichtheit geführt hat, wird die Qualität durch eine stärkere Folie nicht weiter verbessert. Umgekehrt bedeutet dies, dass die Reduzierung der Folienstärke zur Materialersparnis eine bedeutende Herausforderung an die einzusetzende Technik stellt.

Eine weitere Lehre der Erfindung sieht vor, dass das Fixieren der Folie auf der Basisplatte mittels Vakuum erfolgt. Alternativ ist jedoch auch eine rein mechanische Festlegung wenigstens des Randes der Folie möglich.

Das Erwärmen der Folie kann in weiterer Ausgestaltung der Erfindung bevorzugt mittels Infrarotstrahlung oder durch Heißluft erfolgen.

Eine andere bevorzugte Ausbildung sieht vor, dass das Erwärmen der Folie auch oder zusätzlich mittels einer Heizung im Formwerkzeug erfolgen kann. Auch ist es zweckmäßig, das Faserformteil vorzuwärmen, um eine optimale Vernetzung zwischen der thermoplastischen Folie und der Faseroberfläche zu erreichen und eine frühzeitige Abkühlung der Folie beim Kontakt mit dem Faserformteil zu verhindern.

Nach einer weiteren Lehre der Erfindung ist vorgesehen, dass an das Formwerkzeug ein Vakuum anlegbar ist, um eine besonders gleichmäßige Stärke des Faserformteils zu erhalten.

In weiterer Ausgestaltung der Erfindung ist vorgesehen, dass das profilierte Ende des Formwerkzeuges eine zur inneren Form des Faserformteils korrespondierende Geometrie aufweist. Hierbei wirkt das Formwerkzeug sozusagen als "Prägewerkzeug", so dass die sich verformende Folie noch vor dem Zusammenführen mit dem Faserformteil bereits in ihre spätere Form vorgeformt wird. Bevorzugt weist dazu das Formwerkzeug gleichfalls eine Heizvorrichtung auf. Die Matrize lässt sich bevorzugt für den Fügeprozess Folie/Faserformteil ebenfalls beheizen.

Nach einer anderen Ausgestaltung der Erfindung weist das Formwerkzeug am profilierten Ende mindestens eine Vakuumöffnung auf. Das profilierte Ende des Formwerkzeugs kann wenigstens teilweise aus geschäumtem Aluminium gefertigt sein. Nach einer weiteren Lehre der Erfindung weist auch die Basisplatte im Randbereich der Folie mindestens eine Vakuumöffnung zum Fixieren der Folie auf bzw. ist dort aus geschäumtem Aluminium gefertigt. So kann die Folie eng an das Formwerkzeug geführt werden, um eine optimale plastische Verformung zu erreichen.

Wie bereits bei den Heizverfahren erwähnt, ist als Heizvorrichtung bevorzugt eine Infrarot- oder eine Heißluftvorrichtung vorgesehen.

In weiterer Ausgestaltung weist die Matrize eine Mehrzahl von Bohrungen auf, die ein Kanalsystem bilden, das an das Differenzaggregat anschließbar ist. Hierbei ist das Differenzdruckaggregat bevorzugt als Vakuumaggregat ausgestaltet und so in der Lage, das Faserformteil auch von oben der auf dem profilierten Ende des Formwerkzeugs vorverformten Folie zuzuführen, indem das Faserwerkzeug mittels Unterdruck im Hohlraum der Matrize gehalten wird.

Nachfolgend wird die Erfindung anhand einer lediglich ein bevorzugtes Ausführungsbeispiel darstellenden Zeichnung näher erläutert.

In der Zeichnung zeigen
- Fig. 1A - 1C: die einzelnen Schritte des Herstellungsverfahrens in schematischer Darstellung und
- Fig. 2: ein fertig laminiertes Faserformteil.

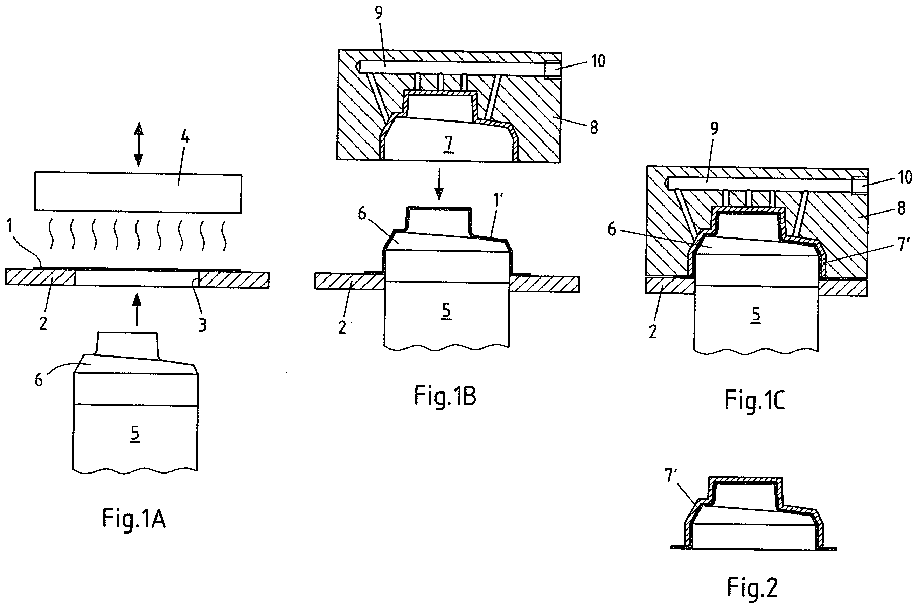

Fig. 1A zeigt, dass zur Durchführung des erfindungsgemäßen Verfahrens eine Folie 1 auf eine Basisplatte 2 gelegt wird, welche eine mittige Öffnung 3 aufweist.

Anschließend wird die Folie 1 mittels einer Wärmeinrichtung 4 von oben her erwärmt. Die Folie 1 ist dabei wenigstens an ihrem Rand mit der Halteplatte 2 durch geeignete Weise gegen Verrutschen fixiert. Eine solche Fixierung kann mittels angelegtem Unterdruck oder auch mechanisch erfolgen.

Die erwärmte und daher dehnfähige Folie 1 wird dann durch Anheben eines Formwerkzeugs 5 durch die Öffnung 3 vorverformt. Dazu weist das profilierte Ende 6 des Formwerkzeugs 5 eine Positivform auf, welche mit der Geometrie der inneren Form des Faserformteils 7 korrespondiert.

In Fig. 1B ist das Formwerkzeug in seiner Endstellung angekommen, man erkennt deutlich, dass sich die thermoplastische Folie der profilierten Form des Endes 6 des Formwerkzeuges 5 angepasst hat und daher hier mit dem Bezugszeichen 1' bezeichnet ist. Oberhalb der Folie 1' ist bereits das noch abzusenkende Faserformteil 7 zu erkennen, welches in einer Matrize 8 gehalten ist, deren Negativform der äußeren Geometrie des Faserformteils 7 entspricht. Verteilt über die Oberfläche dieser Negativform erkennt man ein Kanalsystem verschiedenster Bohrungen 9, durch die über einen Anschluss 10 ein Unterdruck auf die Negativform und damit das darin befindliche Faserformteil 7 ausgeübt werden kann.

In Fig. 1C ist schließlich dargestellt, dass die Matrize 8 auf die vorgeformte Folie 1' abgesenkt worden ist, so dass in dieser Stellung das eigentliche Laminieren zwischen dieser und dem Faserformteil 7 erfolgt. Vor, beim oder nach dem Laminiervorgang wird das Formwerkzeug nach unten aus dem Faserformteil 7' entfernt. Beide Teile bilden nach dem Abkühlen und Öffnen des Werkzeuges ein fertig laminiertes Faserformteil 7', welches in Fig. 2 noch einmal einzeln dargestellt ist.

Es versteht sich, dass die dargestellte schematische Darstellung des erfindungsgemäßen Verfahrens nur zur Erläuterung der Verfahrensschritte dient und keinerlei Beschränkung für verwendete Werkzeuge und/oder Formen bedeuten soll.

## Patentansprüche

1. Verfahren zum Laminieren eines profilierten Faserformteils (7) mit einer thermoplastischen Folie (1), mittels einer Heizvorrichtung (4) und einem Formwerkzeug (5), wobei die Folie (1) mittels Wärme und Differenzdruck auf die zu beschichtende Oberfläche des Faserformteils (7) laminiert wird, wobei wenigstens der Rand der zugeführten Folie (1) auf einer Basisplatte (2) fixiert wird, wobei die Folie (1) erwärmt und mittels dem Formwerkzeug (5) plastisch verformt wird, so dass sich diese der profilierten Form des Endes (6) des Formwerkzeuges (5) anpasst, wobei das Formwerkzeug (5) entfernt und das Faserformteil (7) zugeführt und mit der vorgeformten Folie (1') gefügt, und wobei das laminierte Faserformteil (7') entfernt wird
**dadurch gekennzeichnet, dass**
das Faserformteil (7) für Verpackungselemente, insbesondere für Behälter von Flüssigkeiten, verwendet werden soll, dass für das Verformen ausschließlich ein positives Formwerkzeug (5) verwendet wird und dass zum Entfernen des Formwerkzeugs (5) eine Matrize (8) verwendet wird.

2. Verfahren nach Anspruch 1,
**dadurch gekennzeichnet, dass**
das Fixieren der Folie (1) auf der Basisplatte (2) mittels Vakuum erfolgt.

3. Verfahren nach Anspruch 1,
**dadurch gekennzeichnet, dass**
das Fixieren der Folie (1) auf der Basisplatte (2) mechanisch erfolgt.

4. Verfahren nach einem der Ansprüche 1 bis 3,
**dadurch gekennzeichnet, dass**
das Erwärmen der Folie (1) mittels Infrarotstrahlung erfolgt.

5. Verfahren nach einem der Ansprüche 1 bis 3,
**dadurch gekennzeichnet, dass**
das Erwärmen der Folie (1) mittels Heißluft erfolgt.

6. Verfahren nach einem der Ansprüche 1 bis 5,
**dadurch gekennzeichnet, dass**
das Erwärmen der Folie (1) mittels einer Heizung im Formwerkzeug (5) erfolgt.

7. Verfahren nach einem der Ansprüche 1 bis 6,
**dadurch gekennzeichnet, dass**
das Faserformteil (7) vor dem Laminieren erwärmt wird.

8. Verfahren nach einem der Ansprüche 1 bis 7,
dadurch gkennzeichnet, dass
an das Formwerkzeug (5) ein Vakuum anlegbar ist.

9. Vorrichtung zum Laminieren eines profilierten Faserformteils (7) für Verpackungselemente, insbesondere für Behälter von Flüssigkeiten, mit einer thermoplastischen Folie (1), mit einer Heizvorrichtung (4) zum Erwärmen der Folie (1), einem Formwerkzeug (5) und einer eine Öffnung (3) aufweisenden Basisplatte (2) zum Fixieren wenigstens des Randes der Folie (1), wobei die Folie (1) mittels Wärme und Differenzdruck auf die zu beschichtende Oberfläche des Faserformteils (7) laminiert wird,
**gekennzeichnet durch**
- ausschließlich ein, als Positivform ausgebildetes, Formwerkzeug (5) zum plastischen Verformen der Folie (1), so dass die Folie (1) entsprechend der profilierten Form des Endes des Formwerkzeuges (5) verformbar ist,
- eine Matrize (8) zum Zuführen des Faserformteils (7) und Entfernen des laminierten Faserformteils (7') und
- ein Differenzdruckaggregat.

10. Vorrichtung nach Anspruch 9,
**dadurch gekennzeichnet, dass**
das profilierte Ende (6) des Formwerkzeugs (5) eine zur inneren Form des Faserformteils (7) korrespondierende Geometrie aufweist.

11. Vorrichtung nach Anspruch 9 oder 10,
**dadurch gekennzeichnet, dass**
das Formwerkzeug (5) und/oder die Matrize (8) eine Heizvorrichtung aufweist.

12. Vorrichtung nach einem der Ansprüche 9 bis 11,
**dadurch gekennzeichnet, dass**
das Formwerkzeug am profilierten Ende mindestens eine Vakuumöffnung aufweist.

13. Vorrichtung nach einem der Ansprüche 9 bis 12,
**dadurch gekennzeichnet, dass**
das Formwerkzeug wenigstens teilweise aus geschäumtem Aluminium gefertigt ist.

14. Vorrichtung nach einem der Ansprüche 9 bis 13,
**dadurch gekennzeichnet, dass**
die Basisplatte mindestens eine Vakuumöffnung zum Fixieren der Folie aufweist.

15. Vorrichtung nach einem der Ansprüche 9 bis 14,
**dadurch gekennzeichnet, dass**
die Basisplatte wenigstens teilweise aus geschäumtem Aluminium gefertigt ist.

16. Vorrichtung nach einem der Ansprüche 9 bis 15,
**dadurch gekennzeichnet, dass**
die Heizvorrichtung eine Infrarot-Heizvorrichtung ist.

17. Vorrichtung nach einem der Ansprüche 9 bis 16,
**dadurch gekennzeichnet, dass**
die Heizvorrichtung eine Heißluft-Heizvorrichtung ist.

18. Vorrichtung nach einem der Ansprüche 9 bis 17,
**dadurch gekennzeichnet, dass**
die Matrize (8) eine Mehrzahl von Bohrungen aufweist, die ein Kanalsystem (9) bilden, das an das Differenzdruckaggregat anschließbar ist.

19. Vorrichtung nach einem der Ansprüche 9 bis 18,
**dadurch gekennzeichnet, dass**
das Differenzdruckaggregat ein Vakuumaggregat ist.

## Claims

1. Method for laminating a profiled fibre moulding (7) for packaging elements, with a thermoplastic film (1), by means of a heating device (4) and a moulding tool (5), wherein the film (1) is laminated to the surface of the fibre moulding (7) to be coated by means of heat and differential pressure, wherein
at least the edge (1) of the fed film is fixed to a base plate (2), wherein the film (1) is heated and plastically deformed by means of the moulding tool (5) so that it adjusts to the profiled shape of the end (6) of the moulding tool (5), wherein the moulding tool (5) is removed and the fibre moulding (7) is fed and joined to the pre-formed film (1'), and wherein the laminated fibre moulding (7') is removed **characterised in that**
the fibre moulding (7) is to be used for packaging elements, in particular for containers for liquids, **in that** only a positive moulding tool (5) is used for remoulding and **in that** a die (8) is used for removing the moulding tool (5).

2. Method according to Claim 1,
**characterised in that**
the film (1) is fixed to the base plate (2) by means of a vacuum.

3. Method according to Claim 1,
**characterised in that**
the film (1) is fixed to the base plate (2) mechanically.

4. Method according to any one of Claims 1 to 3, **characterised in that** the film (1) is heated by means of infrared radiation.

5. Method according to any one of Claims 1 to 3,
**characterised in that**
the film (1) is heated by means of hot air.

6. Method according to any one of Claims 1 to 5,
**characterised in that**
the film (1) is heated by means of a heater in the moulding tool (5).

7. Method according to any one of Claims 1 to 6,
**characterised in that**
the fibre moulding (7) is heated before lamination.

8. Method according to any one of Claims 1 to 7,
**characterised in that**
a vacuum can be applied to the moulding tool (5).

9. Device for laminating a profiled fibre moulding (7) for packaging elements, in particular for containers for liquids, with a thermoplastic film (1), by means of a heating device (4) for heating the film (1), a moulding tool (5) and a base plate (2) having an opening (3) for fixing at least the edge of the film (1), wherein the film (1) is laminated onto the surface of the fibre moulding (7) to be coated by means of heat and differential pressure,
**characterised in that**
- only one moulding tool (5) designed as a positive shape for plastic deformation of the film (1) so that the film (1) can be deformed according to the profiled shape of the end of the moulding tool (5),
- a die (8) for feeding the fibre moulding (7) and removing the laminated fibre moulding (7') and
- a differential pressure unit.

10. Device according to Claim 9,
**characterised in that**
the profiled end (6) of the moulding tool (5) has a geometry that corresponds to the inner shape of the fibre moulding (7).

11. Device according to Claim 9 or 10,
**characterised in that**
the moulding tool (5) and/or the die (8) has/have a heating device.

12. Device according to any one of Claims 9 to 11,
**characterised in that**
the moulding tool has at least one vacuum opening at the profiled end.

13. Device according to any one of Claims 9 to 12,
**characterised in that**
the moulding tool is made at least partly from foamed aluminium.

14. Device according to any one of Claims 9 to 13,
**characterised in that**
the base plate has at least one vacuum opening for fixing the film.

15. Device according to any one of Claims 9 to 14,
**characterised in that**
the base plate is made at least partly from foamed aluminium.

16. Device according to any one of Claims 9 to 15,
**characterised in that**
the heating device is an infrared heating device.

17. Device according to any one of Claims 9 to 16,
**characterised in that**
the heating device is a hot air heating device.

18. Device according to any one of Claims 9 to 17,
**characterised in that**
the die (8) has a plurality of holes which form a channel system (9) which can be attached to the differential pressure unit.

19. Device according to any one of Claims 9 to 18,
**characterised in that**
the differential pressure unit is a vacuum unit.

## Revendications

1. Procédé pour le stratification d'une pièce moulée fibreuse, profilée (7) avec une feuille thermoplastique (1), à l'aide d'un dispositif de chauffage (4) et d'un outil de formage (5), sachant que la feuille (1) est stratifiée, sous l'effet de chaleur et de pression différentielle, sur la face supérieure de la pièce moulée fibreuse (7) qui doit être revêtue, sachant que tout au moins le bord de la feuille amenée (1) sera fixé sur une plaque de base (2), sachant que la feuille (1) est chauffée et façonnée plastiquement au moyen de l'outil de formage (5) de manière à ce qu'elle s'adapte à la forme profilée de l'extrémité (6) de l'outil de formage (5), sachant que l'outil de formage (5) est retiré et que la pièce moulée fibreuse (7) est amenée et assemblée avec la feuille préformée (1'), et sachant que la pièce moulée fibreuse, stratifiée (7') est retirée,
**caractérisé en ce que**
la pièce moulée fibreuse (7) est destinée à être utilisée pour des éléments d'emballage, en particulier pour des conteneurs de liquides, que l'on utilise pour le formage exclusivement un outil de formage (5) positif, et que pour retirer l'outil de formage (5) on utilise une matrice (8).

2. Procédé selon la revendication 1,
**caractérisé en ce que**
la fixation de la feuille (1) sur la plaque de base (2) est effectuée par vide.

3. Procédé selon la revendication 1,
**caractérisé en ce que**
la fixation de la feuille (1) sur la plaque de base (2) est effectuée mécaniquement.

4. Procédé selon l'une des revendications 1 à 3,
**caractérisé en ce que**
le chauffage de la feuille (1) est effectué au moyen de rayons infrarouges.

5. Procédé selon l'une des revendications 1 à 3,
**caractérisé en ce que**
le chauffage de la feuille (1) est effectué au moyen d'air chaud.

6. Procédé selon l'une des revendications 1 à 5,
**caractérisé en ce que**
le chauffage de la feuille (1) est effectué au moyen d'un dispositif de chauffage dans l'outil de formage (5).

7. Procédé selon l'une des revendications 1 à 6,
**caractérisé en ce que**
la pièce moulée fibreuse (7) est chauffée avant la stratification.

8. Procédé selon l'une des revendications 1 à 7,
**caractérisé en ce que**,
sur l'outil de formage (5), un vide peut être appliqué.

9. Dispositif pour le stratification d'une pièce formée fibreuse, profilée (7) pour des éléments d'emballage, en particulier pour des conteneurs de liquides, avec une feuille thermoplastique (1), avec un dispositif de chauffage (4) pour le chauffage de la feuille (1), avec un outil de formage (5) et avec une plaque de base (2) qui, étant dotée d'une ouverture (3), est destinée à la fixation d'au moins le bord de la feuille (1), sachant que la feuille (1) est stratifiée au moyen de chaleur et de pression différentielle sur la face supérieure de la pièce formée fibreuse (7) qui doit être revêtue,
**caractérisé par**
- un outil de formage (5), exclusivement réalisé en tant que moule positif, lequel est destiné au formage plastique de la feuille (1), de manière à ce que la feuille (1) soit façonnée conformément à la forme du profil de l'extrémité de l'outil de formage (5),
- une matrice (8) pour amener la pièce formée fibreuse (7) et pour enlever la pièce moulée fibreuse, stratifiée (7') et
- un groupe à pression différentielle.

10. Dispositif selon la revendication 9,
**caractérisé en ce que**
l'extrémité profilée (6) de l'outil de formages (5) est dotée d'une géométrie qui correspond à la forme intérieure de la pièce moulée fibreuse (7).

11. Dispositif selon revendication 9 ou 10,
**caractérisé en ce que**
l'outil de formage (5) et / ou la matrice (8) est / sont doté / dotés d'un dispositif de chauffage.

12. Dispositif selon l'une des revendications 9 à 11,
**caractérisé en ce que**
l'outil de formage est doté d'au moins une ouverture à vide à son extrémité profilée.

13. Dispositif selon l'une des revendications 9 à 12,
**caractérisé en ce que**
l'outil de formage est fabriqué, au moins en partie, en aluminium moussé.

14. Dispositif selon l'une des revendications 9 à 13,
**caractérisé en ce que**
la plaque de base est dotée d'au moins une ouverture à vide pour la fixation de la feuille.

15. Dispositif selon l'une des revendications 9 à 14,
**caractérisé en ce que**
la plaque de base est fabriquée, au moins en partie, en aluminium moussé.

16. Dispositif selon l'une des revendications 9 à 15,
**caractérisé en ce que**
le dispositif de chauffage est un dispositif de chauffage infrarouge.

17. Dispositif selon l'une des revendications 9 à 16,
**caractérisé en ce que**
le dispositif de chauffage est un dispositif de chauffage à air chaud.

18. Dispositif selon l'une des revendications 9 à 17,
**caractérisé en ce que**
la matrice (8) est dotée d'une pluralité de forures, qui forment un système de canaux (9), qui peut être relié au groupe à pression différentielle.

19. Dispositif selon l'une des revendications 9 à 18,
**caractérisé en ce que**
le groupe à pression différentielle est un groupe à vide.
